Europäisches Patentamt

**European Patent Office**

Office européen des brevets

(11) Veröffentlichungsnummer: **0 010 629**
**B1**

(12) **EUROPÄISCHE PATENTSCHRIFT**

(45) Veröffentlichungstag der Patentschrift:
**26.08.81**

(21) Anmeldenummer: **79103744.3**

(22) Anmeldetag: **02.10.79**

(51) Int. Cl.³: **C 01 B 25/10, B 01 J 2/30**

(54) **Verfahren zur Verhinderung des Zusammenbackens von rieselfähigem Phosphorpentachlorid in geschlossenen Behältern.**

(30) Priorität: **25.10.78 DE 2846364**

(43) Veröffentlichungstag der Anmeldung:
**14.05.80 Patentblatt 80/10**

(45) Bekanntmachung des Hinweises auf die Patenterteilung:
**26.08.81 Patentblatt 81/34**

(84) Benannte Vertragsstaaten:
**BE DE FR GB IT NL SE**

(56) Entgegenhaltungen:
**DE-C-565 895**
**US-A-3 661 530**

(73) Patentinhaber: **HOECHST AKTIENGESELLSCHAFT,**
**Postfach 80 03 20, D-6230 Frankfurt/Main 80 (DE)**

(72) Erfinder: **Wortmann, Joachim, Dr.,**
**Friedrich-Jähne-Strasse 54, D-6093 Flörsheim-Wicker (DE)**
Erfinder: **Riess, Gerhard, Dr., Heimchenweg 80,**
**D-6230 Frankfurt/Main 80 (DE)**
Erfinder: **Dany, Franz-Josef, Dr., Kölner Ring 167,**
**D-5042 Erftstadt (DE)**
Erfinder: **Kandler, Joachim, Dr., Amselweg 10,**
**D-5042 Erftstadt (DE)**

Verfahren zur Verhinderung des Zusammenbackens von rieselfähigem Phosphorpentachlorid in geschlossenen Behältern

Phosphorpentachlorid, im folgenden PCl₅ genannt, stellt in frisch hergestelltem Zustand ein rieselfähiges, kristallines, weissen Pulver dar. Beim Lagern dieses Pulvers in verschlossenen Behältern bei Raumtemperatur beobachtet man nach wenigen Wochen Lagerzeit ein zunehmendes Verklumpen und Verkrusten des Produktes. Dadurch wird das Entleeren der Behälter sowie die weitere Handhabung des PCl₅, wie z.B. das Dosieren im Zusammenhang mit chemischen Reaktionen, erheblich erschwert. Bekanntlich zieht PCl₅ an der Luft Wasser an und geht dabei in Phosphoroxychlorid und Chlorwasserstoff über. Daher raucht es an der Luft. Die sicherste Handhabung des PCl₅ erfolgt deshalb unter völligem Luftabschluss in geschlossenen Systemen. Aber auch unter diesen Bedingungen konnte bisher ein Zusammenbacken des PCl₅ bei längerer Lagerzeit nicht verhindert werden.

Die Ursache für das Zusammenbacken des PCl₅ sowie der dabei ablaufende Reaktionsmechanismus sind nicht genau geklärt. Fest steht nur, dass kleine Mengen Feuchtigkeit, z.B. aus der Luft, diesen Prozess fördern. Vermutlich spielt dabei das neben dem Chlorwasserstoff gebildete POCl₃, welches flüssig ist, eine wesentliche Rolle. Schon Spuren von Feuchtigkeit oder von POCl₃ sind ausreichend, um das Zusammenbacken des PCl₅ einzuleiten.

Im herkömmlichen, kontinuierlichen Fertigungsprozess des PCl₅, wie er beispielsweise in «Ullmanns Encyklopädie der technischen Chemie», Springer Verlag, 3. Auflage (1962), Band 13, Seiten 562 und 563 beschrieben ist, wird das PCl₅ ausschliesslich in geschlossenen Vorrichtungen gehandhabt und kommt höchstens bei der Abfüllung in geeignete Vorrats- bzw. Versandbehälter kurzfristig mit der Aussenluft in Berührung. Diese kurze Berührungszeit mit der Ausssenluft reicht offensichtlich aus, um nach einer gewissen Lagerzeit der Behälter, welche mit einer säurefesten Polyäthyleneinlage ausgestattet und mit einem abgedichteten Spannringdeckel versehen sind, das Zusammenbacken des PCl₅ zu bewirken.

Das zusammengebackene Produkt ist hart und spröde und zerfällt beim Versuch, es zu verformen wieder in kristallines Pulver. Zusammenbackungen von PCl₅ mit POCl₃ sind dagegen weich und verformbar. Dass zur Bildung der harten Zusammenbackungen nicht allein die Reaktion des PCl₅ mit Luftfeuchtigkeit ausreicht, zeigt das Verhalten von PCl₅-Aufschüttungen an der Luft. Letztere verflüchtigen sich relativ schnell, ohne dass zwischenzeitlich feste Verklumpungen auftreten oder eine flüssige Phase sichtbar wird. Welche Einflüsse somit neben Spuren von Feuchtigkeit das Zusammenbacken von PCl₅ in geschlossenen Behältern zusätzlich begünstigen, ist nicht bekannt.

Die der nachfolgend beschriebenen Erfindung zugrunde liegende Aufgabe bestand darin, mit Hilfe bestimmter Massnahmen die ursprüngliche Rieselfähigkeit von PCl₅, welches in verschlossenen Vorrats- oder Versandbehältern gelagert ist, auch nach längeren Lagerungszeiten von beispielsweise 6 Monaten zu erhalten. Diese Aufgabe wird gemäss der Erfindung durch Zusatz bestimmter Flüssigkeiten in einer bestimmten Menge zum rieselfähigen PCl₅ gelöst.

Gegenstand der Erfindung ist ein Verfahren zur Verhinderung des Zusammenbackens von rieselfähigem Phosphorpentachlorid in geschlossenen Behältern, welches dadurch gekennzeichnet ist, dass man in den Behälter vor oder nach oder während des Einfüllens des Phosphorpentachlorids etwa 1 bis 15 Gew%, bezogen auf die PCl₅-Menge, einer gegenüber PCl₅ inerten, leicht verdampfbaren organischen Flüssigkeit mit einem Siedepunkt von etwa 20 bis 200° C zugibt und den Behälter luftdicht verschliesst.

Vorzugsweise verwendet man eine Flüssigkeit, die nicht brennbar ist und eine geringe Toxizität besitzt. Aber auch brennbare Flüssigkeiten sind für den genannten Zweck geeignet, wenn man entsprechende Vorsichtsmassnahmen trifft.

Es hat sich als besonders zweckmässig erwiesen, als Flüssigkeit einen teilweise oder vollkommen chlorierten Kohlenwasserstoff mit 1 bis 7 C-Atomen einzusetzen, wie z. B. Methylenchlorid, Chloroform, Tetrachlorkohlenstoff, Tetrachloräthylen, Monofluortrichlormethan oder Trifluortrichloräthan.

Unter brennbaren Flüssigkeiten sind z. B. verflüssigtes Butan,. Benzol, Cyclohexan oder andere Kohlenwasserstoffe mit Siedepunkten zwischen 20 und 200° C zu verstehen.

Schliesslich besteht eine bevorzugte Ausführungsform der Erfindung darin, die Flüssigkeit in einer Menge von 4–8 Gew%, bezogen auf die PCl₅-Menge, einzusetzen.

Im Einzelnen ist zum Gegenstand der Erfindung noch folgendes zu bemerken:

Im Prinzip kann jede organische Flüssigkeit, die nicht mit PCl₅ reagiert und entweder einen ausreichend tiefen Siedepunkt hat oder bei der Verarbeitung des PCl₅ nicht stört, eingesetzt werden. Substanzen mit tiefem Siedepunkt sind allerdings bevorzugt, da diese im Feststoff einfacher zu verteilen sind. Werden diese Stoffe nämlich im Vorratsbehälter dem frisch produzierten PCl₅, das gegebenenfalls noch ca. 30 °C warm ist, vor der Abfüllung in Fässer zugegeben, so verteilen sie sich infolge ihres hohen Dampfdruckes schnell und gleichmässig, ohne dass eine mechanische Durchmischung notwendig ist.

Häufig wird Phosphorpentachlorid für schonende Chlorierungsreaktionen bei tiefen Temperaturen benötigt. Derartige Umsetzungen können z.B. in Methylenchloridsuspension durchgeführt werden. In diesem Falle bietet sich der Einsatz von PCl₅ an, das erfindungsgemäss mit Methylenchlorid behandelt wurde. Das Zusatzmittel kann dann zusammen mit dem für die Suspension benötigten Lösungsmittel nach der Reaktion destillativ entfernt werden.

Normalerweise ist eine mechanische Durchmischung von PCl$_5$ mit der zugefügten Flüssigkeit nicht erforderlich. Sie kann jedoch durch Taumeln des gefüllten Behälters im Fassmischer oder durch andere bekannte Methoden durchgeführt werden. Es ist auch möglich, während der Abfüllung des PCl$_5$ in den Behälter in zeitlich regelmässigen Abständen auf das PCl$_5$ die Flüssigkeit aufzusprühen.

Das erfindungsgemässe Verfahren ist als technisch fortschrittlich zu bezeichnen, da es die Erhaltung der Fliessfähigkeit von frisch hergestelltem PCl$_5$ nach längerer Lagerungszeit in dicht verschlossenen Behältern ermöglicht. Auch nach zwischenzeitlichem mehrmaligem Öffnen und Verschliessen der mit PCl$_5$ gefüllten Behälter bleibt die gute Fliessfähigkeit des PCl$_5$ erhalten. Überraschenderweise verbleibt das PCl$_5$ auch nach Verdampfen bzw. Abdestillieren der Flüssigkeit in rieselfähiger Form, selbst wenn PCl$_5$ in der Flüssigkeit teilweise löslich ist. Ein weiterer Vorteil der erfindungsgemässen Zugabe einer der genannten Flüssigkeiten zu PCl$_5$ ergibt sich aus der dadurch bedingten Verminderung des Wasseraufnahmevermögens des PCl$_5$ aus der Luft. Somit erhält man in Durchführung des erfindungsgemässen Verfahrens ein unverändert, voll wirksames PCl$_5$, das auch bei begrenzter Einwirkung von Luftfeuchtigkeit nicht zu unerwünschten Hydrolyseprodukten zersetzt wird.

Die folgenden Beispiele dienen der näheren Erläuterung der Erfindung ohne letztere darauf zu beschränken.

Beispiel 1

Es wurden drei Blechtrommeln, die jeweils mit einer Polyäthyleneinlage ausgekleidet und mit einem Spannringdeckel dicht verschliessbar waren in folgender Weise mit PCl$_5$ gefüllt:
Trommel 1 wurde mit 50 kg frisch hergestelltem PCl$_5$ gefüllt, das PCl$_5$ anschliessend in einem Schuss mit 2 kg Methylenchlorid versetzt und die Trommel verschlossen.
In Trommel 2 wurden zunächst 2 kg Methylenchlorid eingeschüttet, anschliessend 50 kg PCl$_5$ hinzugefügt und dann die Trommel verschlossen.
Trommel 3 wurde lediglich mit 50 kg PCl$_5$ beschickt und dann verschlossen.

Die 3 Blechtrommeln wurden ohne weitere Bewegung 8 Monate bei Raumtemperatur gelagert und dann geöffnet. Es wurde festgestellt, dass das PCl$_5$ in den Trommeln 1 und 2 insgesamt gut rieselfähig war. Analysen der Boden- und Oberschicht des Trommelinhaltes ergaben einen gleichmässigen Gehalt von 3,6-4% Methylenchlorid. Die Oberschicht des PCl$_5$ in der Trommel 3 war in einer Dicke von 6 cm steinhart vekrustet. Auch im Innern der PCl$_5$-Füllung hatten sich mehrere harte Klumpen mit einem Durchmesser von bis zu 5 cm gebildet.

Beispiel 2

a) In einer Laboratoriumsapparatur wurden in diskontinuierlicher Verfahrensweise 5 kg PCl$_5$ hergestellt und letzteres unter Luftausschluss in einer Glasflasche gesammelt. Das PCl$_5$ wurde anschliessend bei einer Temperatur von etwa 30°C mit 0,4 kg Trifluortrichlorethan in einem Schuss versetzt. Danach wurde der Inhalt der Glasflasche in eine Spannringdeckelbüchse mit einem Inhalt von 10 Litern gegeben und diese verschlossen.

b) Es wurde analog a) verfahren, wobei jedoch das Trifluortrichloräthan in 8 Portionen zu je 50 g, in gleichmässigen Abständen auf die Füllzeit der Glasflasche mit PCl$_5$ verteilt, aufgegeben wurde. Das Gemisch wurde ebenfalls in einer 10 l-Spannringdeckelbüchse gelagert.

c) Es wurde analog a) verfahren, wobei jedoch der Inhalt der Spannringdeckelbüchse 30 Minuten in einem Taumelmischer bewegt wurde.

d) Es wurde analog a) verfahren, wobei jedoch auf den Zusatz des Trifluortrichloräthans verzichtet wurde.

Vorgenannte vier Proben wurden nach 6 Monaten Lagerzeit untersucht. Die Proben a) bis c) waren ohne Unterschied rieselfähig, während die Proben d) starke Verklumpungen im Innern und eine etwa 2 cm starke Kruste an der Oberfläche aufwies.

Beispiel 3

Es wurde analog Beispiel 2a) verfahren, wobei jedoch anstelle des Trifluortrichloräthans jeweils 200 g folgender organischer Flüssigkeiten eingesetzt wurden:

Chloroform, Tetrachlorkohlenstoff, Tetrachloräthylen, Monofluortrichlormethan, Butan, Benzol und Cyclohexan.

Nach 6monatiger Lagerzeit in den verschlossenen Spannringdeckelbüchsen erwiesen sich die einzelnen Inhalte einwandfrei rieselfähig.

Beispiel 4

Es wurden analog Beispiel 2a) 7 Büchsen mit jeweils 5 kg PCl$_5$ gefüllt, anschliessend die einzelnen Büchsen mit unterschiedlichen Mengen Methylenchlorid beschickt und die Büchsen 6 Monate gelagert. Danach wurden die Büchsen geöffnet und die Inhalte mit dem aus der Tabelle ersichtlichen Ergebnis überprüft.

Tabelle

| Büchse Nr. | Methylen-chlorid-menge | PCl$_5$-Befund |
|---|---|---|
| 1 | 50 g | leichte Kruste an der Oberfläche, etwa 5 mm dick |
| 2 | 150 g | keine Krusten- und |
| 3 | 250 g | Klumpenbildung – |
| 4 | 450 g | gut rieselfähiges Produkt |
| 5 | 550 g | |
| 6 | 650 g | keine Krusten- und |
| 7 | 750 g | Klumpenbildung, jedoch nur bedingt rieselfähiges, methylenchloridfeuchtes Produkt |

Beispiel 5

Der Inhalt der Büchsen 3 und 4 in Beispiel 4 wurde jeweils in einen 5 I-Glaskolben eingefüllt und der Glaskolben in ein Wasserbad von 60°C Temperatur gestellt, wobei auf die Öffnung des Kolbens ein mit Calciumchlorid gefülltes Trockenrohr gesteckt war. Nach Ablauf von 2 Stunden wurde der Glaskolben kurzzeitig (etwa 5 min) evakuiert, um das Methylenchlorid vollständig zu entfernen.

Im Glaskolben verblieb in beiden Fällen ein PCl$_5$ von ausserordentlich guter Rieselfähigkeit.

Beispiel 6

Es wurden entsprechend Beispiel 2a) zweimal 5 kg PCl$_5$ hergestellt und das PCl$_5$ in Spannringdeckelbüchsen mit 10 Liter Inhalt gegeben. In Büchse a) wurden zusätzlich 500 g Tetrachlorkohlenstoff gegeben, während Büchse b) ohne diesen Zusatz verblieb. Beide Büchsen wurden 6 Monate gelagert, wobei in vierwöchigem Abstand die Deckel für jeweils 5 Minuten abgenommen wurden. Es wurde darauf geachtet, dass dabei möglichst keine Bewegung des Produktes erfolgte. Der Inhalt der geöffneten Büchse b) entwickelte stets deutlich stärkere Salzsäurenebel als der in Büchse a), wenn die Feuchtigkeit der Aussenluft Zutritt hatte. Nach Ablauf der Lagerzeit war das Produkt a) rieselfähig, wies an der Oberfläche nur eine ca. 2 mm starke Verkrustung auf, während Produkt b) stark verklumpt und an der Oberfläche in einer Schicht von ca. 9 cm Dicke verkrustet war. Beide Produkte wurden – sofern notwendig – nach mechanischer Zerkleinerung homogenisiert. Dann wurden jeweils 500 g der Proben a) und b) in einen Glaskolben gefüllt und der Kolben im Wasserbad ca. 15 min auf 50°C unter Vakuum erwärmt. Anschliessend wurde durch Elementaranalyse der PCl$_5$-Gehalt der Proben a) und b) ermittelt. Letzterer betrug bei Probe a) über 99,5% und bei Probe b) etwa 98,5%.

Patentansprüche

1. Verfahren zur Verhinderung des Zusammenbackens von rieselfähigem Phosphorpentachlorid in geschlossenen Behältern, dadurch gekennzeichnet, dass man in den Behälter vor oder nach oder während des Einfüllens des Phosphorpentachlorids etwa 1 bis 15 Gew.%, bezogen auf die PCl$_5$-Menge, einer gegenüber PCl$_5$ inerten, leicht verdampfbaren organischen Flüssigkeit mit einem Siedepunkt von etwa 20 bis 200°C zugibt und den Behälter luftdicht verschliesst.

2. Verfahren nach Anspruch 1, dadurch gekennzeichnet, dass die Flüssigkeit nicht brennbar ist und eine geringe Toxizität besitzt.

3. Verfahren nach Anspruch 1 oder 2, dadurch gekennzeichnet, dass die Flüssigkeit ein teilweise oder vollkommen chlorierter Kohlenwasserstoff mit 1 bis 7 C-Atomen ist.

4. Verfahren nach Anspruch 3, dadurch gekennzeichnet, dass die Flüssigkeit Methylenchlorid, Chloroform, Tetrachlorkohlenstoff, Tetrachloräthylen, Monofluortrichlormethan oder Trifluortrichloräthan ist.

5. Verfahren nach Anspruch 1, dadurch gekennzeichnet, dass die Flüssigkeit verflüssigtes Butan, Benzol, Cyclohexan oder ein anderer Kohlenwasserstoff mit einem Siedepunkt zwischen 20 und 200°C ist.

6. Verfahren nach Anspruch 1–5, dadurch gekennzeichnet, dass die Flüssigkeitsmenge 4–8 Gew%, bezogen auf die PCl$_5$-Menge, beträgt.

Claims

1. Process for inhibiting the coalescence of flowable phosphorus pentachloride in closed containers, characterized in that a readily volatizable organic liquid boiling at about 20 to 200°C and being inert with respect to PCl$_5$ is admitted to the container prior to, after or during the introduction of phosphorus pentachloride thereinto, and the container is hermetically sealed, the liquid being used in a proportion of about 1 to 15 weight%, based on the quantity of PCl$_5$.

2. Process as claimed in claim 1, wherein an incombustible liquid of low toxicity is used.

3. Process as claimed in claim 1 or 2, wherein the liquid is a partially or completely chlorinated hydrocarbon with 1 to 7 carbon atoms.

4. Process as claimed in claim 3, wherein the liquid is methylene chloride, chloroform, carbon tetrachloride, tetrachloroethylene, monofluorotrichloromethane or trifluorotrichloroethane.

5. Process as claimed in claim 1, wherein the liquid is liquefied butane, benzene, cyclohexane or another hydrocarbon boiling between 20 and 200°C.

6. The process as claimed in any of claims 1 to 5, wherein the liquid is used in a proportion of 4 to 8 weight %, based on the quantity of PCl$_5$.

Revendications

1. Procédé pour empêcher l'agglomération de pentachlorure de phosphore fluide dans des récipients fermés, caractérisé en ce que l'on ajoute dans le récipient, avant ou après ou pendant le remplissage avec le pentachlorure de phosphore, environ 1 à 15% en poids, par rapport à la quantité de PCl$_5$, d'un liquide organique facilement vaporisable, inerte vis-à-vis de PCl$_5$, d'un point d'ébullition d'environ 20 à 200°C, et on verrouille le récipient de manière étanche à l'air.

2. Procédé selon la revendication 1, caractérisé en ce que le liquide est incombustible et possède une faible toxicité.

3. Procédé selon la revendication 1 ou 2, caractérisé en ce que le liquide est un hydrocarbure en C$_1$–C$_7$ partiellement ou totalement chloré.

4. Procédé selon la revendication 3, caractérisé en ce que le liquide est le chlorure de méthylène, le chloroforme, le tétrachlorure de carbone, le tétrachloroéthylène, le monofluorotrichlorométhane ou le trifluorotrichloroéthane.

5. Procédé selon la revendication 1, caractérisé en ce que le liquide est le butane liquéfié, le benzène, le cyclohexane ou un autre hydrocarbure ayant un point d'ébullition entre 20 et 200°C.

6. Procédé selon la revendication 1–5, caractérisé en ce que la quantité de liquide est de 4–8% en poids, par rapport à la quantité de $PCl_5$.